# EUROPÄISCHE PATENTSCHRIFT

(11) **EP 3 105 514 B1**
(45) Veröffentlichungstag und Bekanntmachung des Hinweises auf die Patenterteilung: **13.11.2019**
(21) Anmeldenummer: 15708132.4
(22) Anmeldetag: 13.02.2015
(51) Int. Cl.: F24S 23/74, F24S 30/425, F24S 40/80, F24S 80/30

(54) **VORRICHTUNG ZUR VERBINDUNG EINES ANSCHLUSSES MIT EINEM ABSORBERROHR EINES SOLARTHERMISCHEN KRAFTWERKS, EIN SOLARTHERMISCHES KRAFTWERK UND VERFAHREN ZUR UMWANDLUNG VON SOLARENERGIE IN THERMISCHE ENERGIE.**
DEVICE FOR CONNECTING A CONNECTOR TO AN ABSORBER TUBE OF A SOLAR-THERMAL POWER PLANT, SOLAR-THERMAL POWER PLANT AND METHOD FOR CONVERTING SOLAR ENERGY INTO THERMAL ENERGY
DISPOSITIF DE CONNEXION D'UN RACCORD À UN TUBE ABSORBEUR D'UNE CENTRALE THERMIQUE SOLAIRE, CENTRALE THERMIQUE SOLAIRE ET PROCÉDÉ DE CONVERSION DE L'ÉNERGIE SOLAIRE EN ÉNERGIE THERMIQUE

(30) Priorität: 14.02.2014 DE 102014202769
(43) Veröffentlichungstag der Anmeldung: 21.12.2016
(73) Patentinhaber: Senior Flexonics GmbH, 34121 Kassel (DE)
(72) Erfinder: BECK, Karsten, 34292 Ahnatal (DE)
(74) Vertreter: Maikowski & Ninnemann Patentanwälte Partnerschaft mbB
(86) Internationale Anmeldenummer: PCT/EP2015/053119
(87) Internationale Veröffentlichungsnummer: WO 2015/121427

(56) Entgegenhaltungen:
- EP-A1- 2 479 511
- EP-A2- 1 998 120
- DE-A1-102008 037 711
- US-A- 5 024 211
- James Moreno: "NREL TES Workshop-Golden-Feb03 1 2002 Evaluation of Interconnections with Molten Salt HTF in a Trough SF", , 21. Februar 2003 (2003-02-21), XP055109032, Gefunden im Internet: URL:http://www.nrel.gov/csp/troughnet/pdfs /moreno_sf_interconnections_with_salt_htf. pdf [gefunden am 2014-03-19]

## Beschreibung

Vorrichtung zur Verbindung eines Anschlusses mit einem Absorberrohr eines solarthermischen Kraftwerks, ein solarthermisches Kraftwerk und Verfahren zur Umwandlung von Solarenergie in thermische Energie.

Die Erfindung betrifft eine Vorrichtung zur Verbindung eines Anschlusses mit einem Absorberrohr eines solarthermischen Kraftwerks mit den Merkmalen des Anspruchs 1. Ferner betrifft die Erfindung ein solarthermisches Kraftwerk mit den Merkmalen des Anspruchs 13 und ein Verfahren zur Umwandlung von Solarenergie in thermische Energie nach Anspruch 14.

In zunehmenden Maße werden heute solarthermische Kraftwerke eingesetzt, um auf umweltfreundliche Weise Energie zu erzeugen. Solche Kraftwerke weisen Solarkollektoren auf, wie z.B. Parabolspiegel. Speziell in Parabolrinnen-Kraftwerken weisen Solarkollektoren Parabolrinnenspiegel und Absorberrohre (auch Receiverröhren genannt) auf. Mit diesen Parabolrinnenspiegeln wird die Sonnenstrahlung eingefangen und die Energie über Receiverröhren an ein Arbeitsmedium (Arbeitsfluid), z.B. Öl, abgegeben. Dabei können im System Temperaturen von 500 °C oder mehr erreicht werden. Da die Solarkollektoren auf Grund der scheinbaren Bewegung der Sonne beweglich ausgebildet sein müssen, gibt es hohe Anforderungen an die verwendeten Verbindungen zwischen Teilen der Anlage. Zur Verbindung der Absorberröhren, die sich bei Temperaturerhöhung ausdehnen, mit anderen Anlagenteilen, z.B. festen Rohrleitungen, sind unterschiedliche Lösungen bekannt. Eine Lösung verwendet sogenannte Ball-Joints mit dazwischen liegenden Rohrstücken. Ebenfalls sind Systeme bekannt, bei denen Metallschläuche mit einer Drehdurchführung verwendet werden.

Die Solarkollektoren und damit verbundenen Absorberrohre führen eine Schwenkbewegung aus, so dass das Arbeitsmedium aus einem in vielen Richtungen beweglichen System abgeführt werden muss.

Die EP 2 479 511 A1 beschreibt eine Vorrichtung zum Anschließen einer Empfangsleitung eines einstellbaren Solarkollektors an stationäre Leitungen.

Der vorliegenden Erfindung liegt die Aufgabe zugrunde, eine Vorrichtung, ein solarthermische Kraftwerk und ein Verfahren zu schaffen, die auch bei hohen Temperaturen und / oder Drücken eine einwandfreie und nachhaltige Beweglichkeit der Solarkollektoren gewährleisten.

Diese Aufgabe wird erfindungsgemäß durch eine Vorrichtung mit den Merkmalen des Anspruchs 1 gelöst.

Dabei ist mindestens eine von einem Arbeitsmedium durchströmbare flexible Rohrvorrichtung zwischen einem Anschluss und dem Absorberrohr zur Aufnahme eines beim Verschwenken des Solarkollektor auftretenden Drehmoments und / oder einer Kraft aufgrund einer Längenänderung des Absorberrohres angeordnet. Ferner ist die mindestens eine flexible Rohrvorrichtung über ein Kopplungsmittel fest mit einem Stützelement gekoppelt, wobei das Stützelement an die Schwenkbewegung des Solarkollektors gekoppelt ist.

Die Verbindung zwischen dem Absorberrohr einer solarthermischen Anlage und einem Anschluss wird somit durch flexible Rohrvorrichtungen sichergestellt, wobei eine räumliche Stabilisierung durch ein Stützelement erfolgt, was an die Verschwenkung des mindestens einen Solarkollektors gekoppelt ist. Somit bewegt sich das Stützelement synchron mit einer Halterung des Solarkollektors mit; das Kopplungselement bewegt sich synchron mit den Solarkollektoren.

Dabei kann der Anschluss an einer Festleitung und / oder einem Rohrleitungsende angeordnet sein. Die Festleitung ist relativ starr gegenüber der Solarkollektorvorrichtung angeordnet. Das Rohrleitungsende kann eine gewisse Beweglichkeit, insbesondere durch Längenausdehnung aufweisen. Damit ist es möglich, das Absorberrohr auch an Gegenstände anzuschließen, die beweglich sind.

Das Kopplungsmittel teilt die mindestens eine flexible Rohrvorrichtung in zwei Bereiche, wobei die mindestens eine flexible Rohrvorrichtung so ausgebildet ist, dass zwischen dem Absorberrohr und dem Kopplungsmittel im Wesentlichen Kräfte aus Längenänderungen des Absorberrohres aufgenommen werden und dass zwischen dem Kopplungsmittel und dem Anschluss in einer ersten und zweiten flexiblen Rohrvorrichtung im Wesentlichen Kräfte und / oder Drehmomente aus der Schwenkbewegung der Solarkollektoren aufgenommen werden. Ferner ist das Stützelement in einer Ausführungsform relativ zu einer Halterung des Solarkollektors oder dem Solarkollektor starr ausgebildet, so dass insbesondere die Bewegungen des Kopplungsmittels am Stützelement synchron zur Bewegung des Solarkollektors erfolgen können.

Die erste und die zweite flexible Rohrvorrichtung sind in Strömungsrichtung des Arbeitsmedium hintereinander angeordnet, wobei die erste und die zweite flexible Rohrvorrichtung über ein vom Arbeitsmedium durchströmbares Verbindungselement miteinander verbunden sind, wobei das Verbindungselement insbesondere als starres Rohrelement ausgebildet ist. Dabei ist es insbesondere möglich, dass die flexiblen Rohrvorrichtungen untereinander die gleiche Länge aufweisen. Durch im Wesentlichen gleiche Längen wird eine Symmetrie erzeugt, die die jeweiligen Belastungszustände nivelliert; die flexiblen Rohrvorrichtunten werden gleich beansprucht.

Dabei liegen die erste und die zweite flexible Rohrvorrichtung in parallelen Ebenen zueinander. Zusätzlich können die erste und die zweite flexible Rohrvorrichtungen so angeordnet sein, dass im Betrieb die Krümmungen in der Regel gegensätzlich sind.

Insbesondere kann in einer Ausführungsform das Verbindungselement und / oder die mindestens eine flexible Rohrvorrichtungen mit einem Führungsmittel gekoppelt sein, so dass insbesondere in der Bewegung der mindestens einen flexiblen Rohrvorrichtung das Führungsmittel Kräfte aufnehmen kann. Insbesondere kann das Führungsmittel im Wesentlichen vertikale Kräfte zur Abstützung des Verbindungselementes aufnehmen.

In einer weiteren Ausführungsform ist mindestens eine flexible Absorberrohrvorrichtung mit dem Absorberrohr koppelbar oder gekoppelt, wobei Änderungen der Längsausdehnung des Absorberrohres durch die flexible Absorberrohrvorrichtung kompensierbar sind und die mindestens eine flexible Absorberrohrvorrichtung in Strömungsrichtung des Arbeitsmediums vor oder hinter der mindestens einen flexiblen Rohrvorrichtung angeordnet ist.

Alternativ oder zusätzlich sind die mindestens zwei flexiblen Rohrvorrichtungen und / oder die flexible Absorberrohrvorrichtung als Metallschlauch ausgebildet oder sie weisen einen Metallschlauch auf.

Durch ein Mittel zur Synchronisierung der Schwenkbewegung der flexiblen Rohrvorrichtungen mit der Schwenkbewegung des mindestens einen Solarkollektors wird ein passives Mitbewegen erreicht. Dabei kann das Mittel zur Synchronisierung insbesondere einen Schwenkarm als Halterung des mindestens einen Solarkollektors aufweisen.

Bei einer weiteren Ausführungsform kann mindestens eine flexible Rohrvorrichtung mit einem Kompensatorensystem mit mindestens einem Angularkompensator, mindestens einem Lateral-Kompensator, mindestens einem Universal- und / oder mindestens einem kardanischen Kompensator, insbesondere drei Angular-Kompensatoren gekoppelt sein.

Eine besonders günstige Kinematik ergibt sich, wenn das Kopplungsmittel oberhalb der Schwenkachse angeordnet ist und insbesondere die Ebene, in der die Halterung um die Schwenkachse verschwenkbar ist, parallel zu der Ebene ist, in der das Kopplungsmittel verschwenkbar ist.

Die Aufgabe wird auch durch ein solarthermisches Kraftwerk mit den Merkmalen des Anspruchs 13 gelöst. Ferner wird die Aufgabe durch ein Verfahren zur Umwandlung von Solarenergie in thermische Energie mit den Merkmalen des Anspruchs 14 gelöst.

Die Erfindung wird nachfolgend unter Bezugnahme auf die Figuren der Zeichnungen an mehreren Ausführungsbeispielen näher erläutert. Es zeigen:
- Fig. 1: eine Frontalansicht einer Ausführungsform einer Vorrichtung zur Verbindung eines Anschlusses, nämlich einer Festleitung mit einem Absorberrohr eines solarthermischen Kraftwerks;
- Fig. 1A: eine perspektivische Ansicht der Ausführungsform gemäß Fig. 1;
- Fig. 1B: eine perspektivische Darstellung eines Solarkollektors in einem solarthermischen Kraftwerk;
- Fig. 2: eine Frontalansicht der Ausführungsform gemäß Fig. 1 in einer anderen Betriebsstellung;
- Fig. 3: eine schematische Seitenansicht der Ausführungsform gemäß Fig. 1 mit zwei Auslenkungen;
- Fig. 4: eine schematische Vorderansicht der Ausführungsform gemäß Fig. 1 mit zwei Auslenkungslagen;
- Fig. 5: eine perspektivische Darstellung der Ausführungsform gemäß Fig. 1 in einer Lage;
- Fig. 6: eine perspektivische Darstellung der Ausführungsform gemäß Fig. 1 in weiteren Lagen;
- Fig. 7: eine Detaildarstellung der Ausführungsform gemäß Fig. 1;
- Fig. 8: eine schematische Ansicht einer nicht erfindungsgemässen Vorrichtung mit nur einer flexiblen Rohrvorrichtung;
- Fig. 9: eine schematische Draufsicht auf einen Ausschnitte eines solarthermischen Kraftwerkes;
- Fig. 9A: Detailansicht einer Anbindung an einen Anschluss.

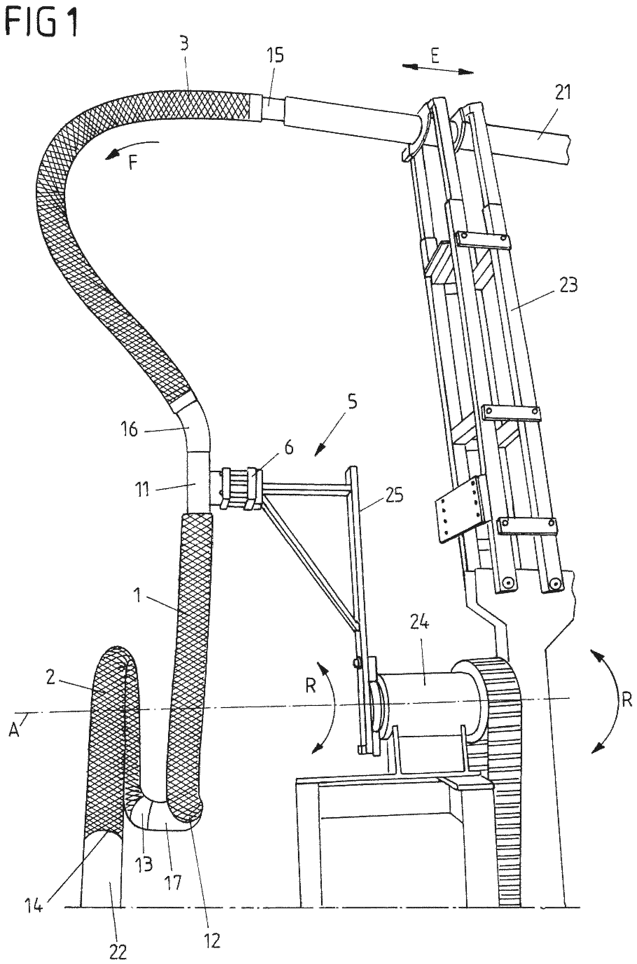

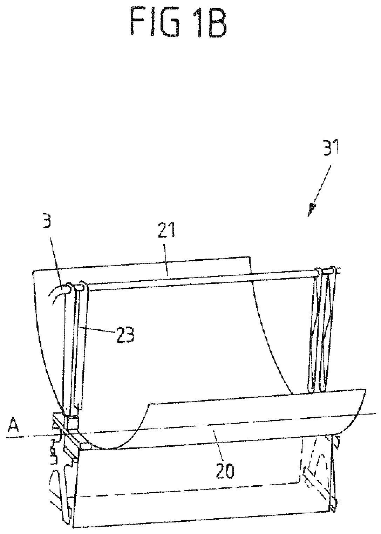

In Fig. 1B ist ein Teil eines solarthermischen Kraftwerkes, nämlich eine Solarkollektorvorrichtung 31 in einer perspektivischen Ansicht dargestellt. Die Solarkollektorvorrichtung 31 weist einen Parabol-Rinnenspiegel als Solarkollektor 20 auf. Ferner liegt eine Anbindung für ein abfließendes oder zufließendes Arbeitsmedium für ein Absorberrohr 21 vor. Der Solarkollektor 20 wird über die Halterung 23 um die Schwenkachse A verschwenkt, was im Folgenden noch näher beschrieben wird.

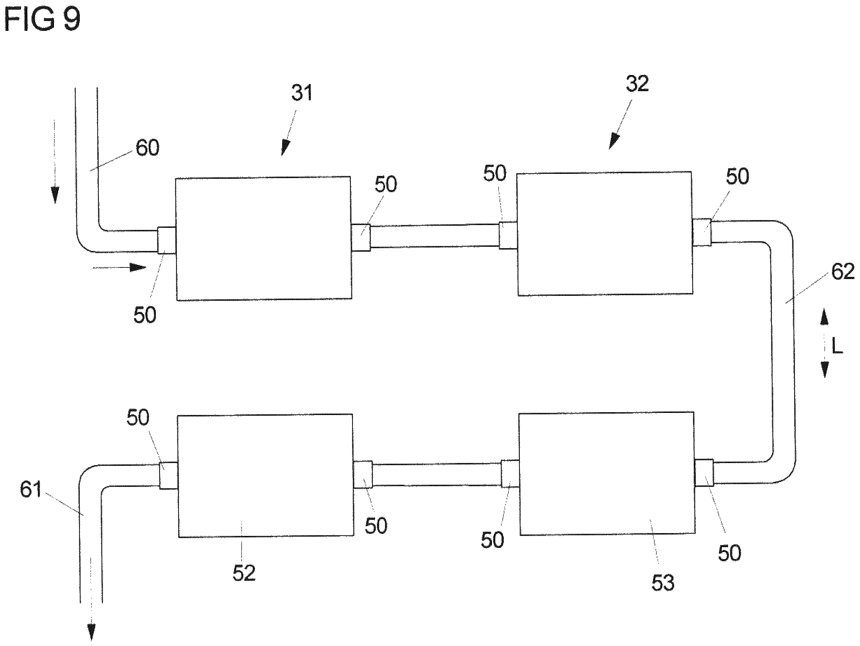

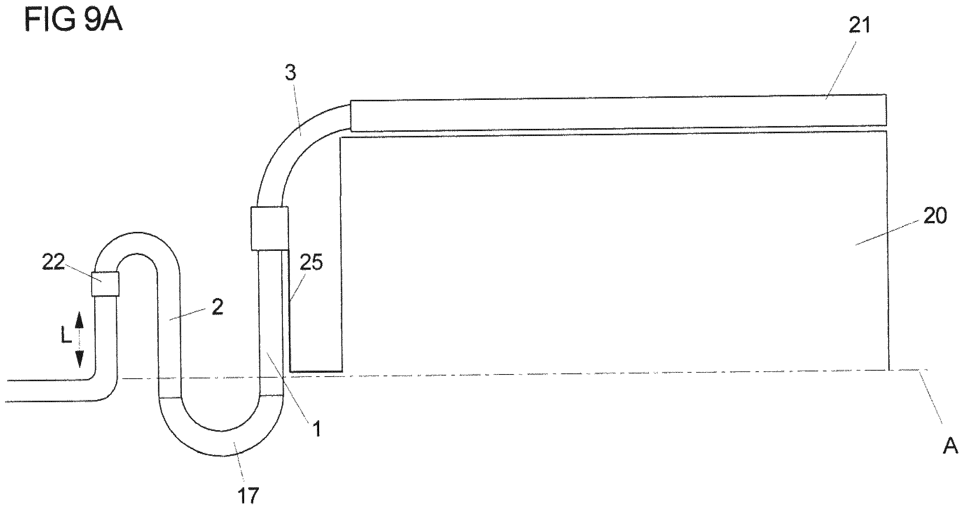

Die Anbindung des Absorberrohres 21 mit einem hier nicht dargestellten Anschluss 22 erfolgt über eine flexible Absorberrohrvorrichtung 3 (die nachfolgenden Einheiten sind hier nicht dargestellt). Solarthermische Kraftwerke weisen in der Regel eine Vielzahl von Solarkollektoren 20 auf, die in Reihen angeordnet sind. In Fig. 9 wird schematisch die Verwendung von Ausführungsformen der Vorrichtung in einem solarthermischen Kraftwerk beschrieben.

Auf Grund der scheinbaren Sonnenbewegung müssen die Solarkollektoren 20 solarthermischer Kraftwerke im Laufe des Tages dem sich ändernden Sonnenstand nachgeführt werden.

Unter Berücksichtigung einer Unwetter-Parkstellung (d.h. die Spiegelfläche ist nach unten gerichtet), ergibt sich eine Schwenkbewegung der Solarkollektoren 20 von ca. 270° um die Schwenkachse A. In anderen Ausführungsformen können auch andere Winkelbereiche verwendet werden. Solarthermische Kraftwerke, die z.B. nach dem Parabol-Rinnenspiegel-Prinzip arbeiten, benötigen eine Vorrichtung für den An- oder Abtransport des kühlen oder erhitzten Arbeitsmediums, wobei mehrere überlagerte Bewegungen ausführbar sein müssen.

Wenn z.B. Parabol-Rinnenspiegel in einem solarthermischen Kraftwerk als Solarkollektor 20 verwendet werden, wird die Brennlinie in Nord-Südrichtung aufgestellt und um eine Schwenkachse A in Ost-Westrichtung, dem Lauf der Sonne folgend, geschwenkt.

In dem Solarkollektor 20 wird einfallendes Sonnenlicht aufgefangen und in der Brennlinie gebündelt. In der Brennlinie ist ein Absorberrohr 21 angeordnet, das von dem Arbeitsmedium, hier Öl, durchströmt ist. Grundsätzlich können aber auch andere Arbeitsmedien, wie z.B. Salzschmelze oder Dampf verwendet werden.

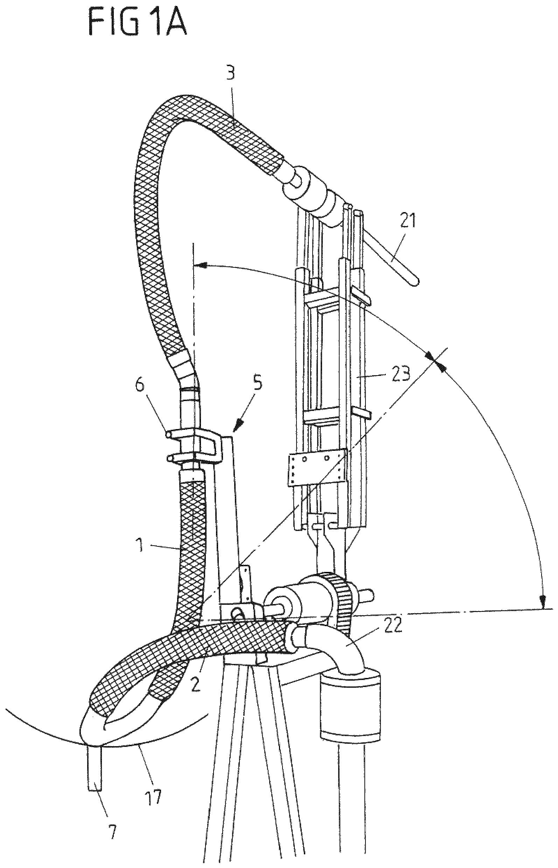

Auf Grund der hohen thermischen Belastung unterliegen das Absorberrohr 21 und die flexiblen Rohrleitungen 1, 2, 3 (siehe Fig. 1 u.a.) großen thermo-mechanischen Belastungen. Als Betriebstemperaturen können in einem solarthermischen Kraftwerk Temperaturen von über 500 °C und Drücke bis 100 bar erreicht werden.

Im Folgenden wird auf Einzelheiten der Vorrichtung zur Anbindung des Absorberrohres 21 eingegangen, so dass die Solarkollektoren 20 nicht mehr dargestellt werden.

In Fig. 1 ist eine Ausführungsform einer solchen Vorrichtung für die Verbindung des Absorberrohres 21 mit einem Anschluss 22 dargestellt. Der Anschluss 22 ist hier als Festleitung ausgebildet, so dass dieser relativ zu den Solarkollektoren 20 oder dem Absorberrohr 21 nicht beweglich ausgebildet ist. Die Festleitung stellt eine Verbindung zu nachfolgenden Einheiten (hier nicht dargestellt) dar, die dem erhitzten Arbeitsmedium die Wärme entziehen oder kühles Arbeitsmedium zur Einspeisung in das Absorberrohr 21 bereitstellen. Im Zusammenhang mit der Fig. 9 werden weitere Ausführungsformen beschrieben, bei denen die Anschlüsse 22 relativ gegenüber dem Solarkollektor 20 beweglich sind.

Wenn der Solarkollektor 20 entsprechend der Richtung R verschwenkt wird, bewegt sich das Absorberrohr 21 jeweils mit; d.h. es wird nicht direkt angetrieben, so dass der Antrieb nur über die Verschwenkung der Solarkollektoren 20 erfolgt. Eine um die Schwenkachse A bewegliche (siehe Doppelpfeil R) Halterung 23 erlaubt die gemeinsame Bewegung des Solarkollektors 20 und des Absorberrohres 21.

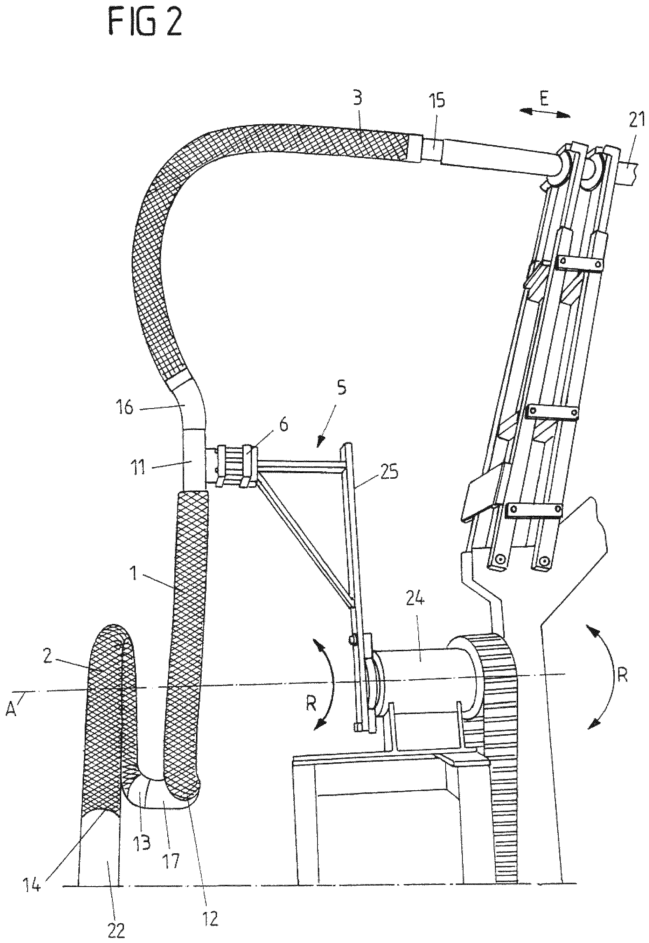

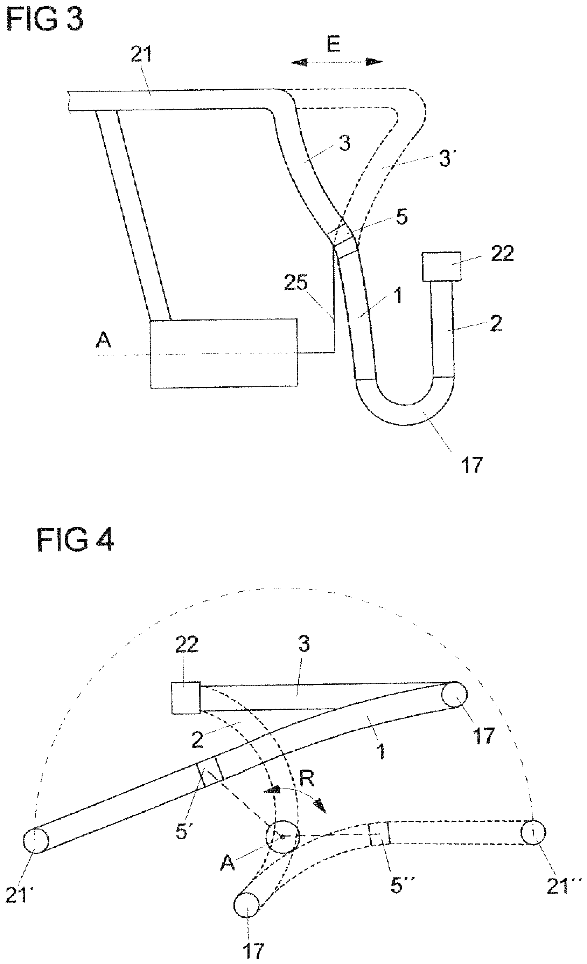

Über diese Schwenkbewegung erfolgt die Mitnahme einer flexiblen Absorberrohrvorrichtung 3, die mit einem ersten Ende 15 mit dem Absorberrohr 21 verbunden ist. Durch die Flexibilität der Absorberrohrvorrichtung 3 kann diese eine Längsausdehnung E des Absorberrohres 21 aufnehmen, wie dies in Fig. 2, 4 und 4 dargestellt ist. In Fig. 2 ist die gleiche Ausführungsform wie in Fig. 1 dargestellt, nur ist hier das Absorberrohr 21 in seiner verkürzten Form dargestellt. Die Halterung 23 ist - gegenüber der in Fig. 1 dargestellten Lage - entsprechend nach rechts ausgelenkt. Die Fig. 3 zeigt die Bewegung in schematischer Weise.

Auf Grund der hohen Temperaturunterschiede zwischen dem Umgebungsluftzustand und der Temperaturen der Anlagenteile im Betriebszustand kann es zu einer axialen Längenausdehnung E des Absorberrohres 21 kommen. Dabei ist eine Längenausdehnung E in der Größenordnung von mehr als 50 cm durchaus möglich.

Diese Längenausdehnung E wird von der flexiblen Absorberrohrvorrichtung 3 aufgefangen.

In Strömungsrichtung vor oder hinter der Absorberrohrvorrichtung 3 - je nach Anordnung im solarthermischen Kraftwerk - ist eine erste flexible Rohrvorrichtung 1 und daran anschließend eine zweite flexible Rohrvorrichtung 2 angeordnet. Insgesamt werden in der dargestellten Ausführungsform drei flexible Rohrvorrichtungen 1, 2, 3 verwendet. Es ist aber auch möglich mehr als drei flexible Rohrvorrichtungen 1, 2, 3 zu verwenden.

Das zweite Ende 16 der flexiblen Absorberrohrvorrichtung 3 ist mit dem ersten Ende 11 der ersten flexiblen Rohrvorrichtung 1 verbunden, z.B. verschweißt.

Dabei ist die erste flexible Rohrvorrichtung 1 über ein Kopplungsmittel 6 mit einem Stützelement 5 gekoppelt, um die räumliche Lage der flexiblen Rohrvorrichtungen 1, 2, 3 zu stabilisieren. Das Stützelement 5 ist über ein Befestigungsmittel 25 so angebunden, dass es die Schwenkbewegung der Halterung 23 (und damit die Schwenkbewegung des Absorberrohres 21 und des Solarkollektors 20) synchron mitmacht (siehe Doppelpfeil R) in Fig. 1.

Die dargestellte Stützvorrichtung 5 weist ein Kopplungsmittel 6 für die Ankopplung der ersten flexiblen Rohrvorrichtung 1 auf, wobei das Kopplungsmittel 6 fest an dem Befestigungsmittel 25 angeordnet ist, so dass das Kopplungsmittel 6 - und damit der angebundene Bereich der flexiblen Rohrvorrichtung 1 - diese Bewegung synchron mitmacht. Das Kopplungsmittel 6 ist am Befestigungsmittel 25 oberhalb der Schwenkachse A angeordnet. Die Ebene, in der die Halterung 23 um die Schwenkachse A verschwenkbar ist, ist parallel zu der Ebene, in der das Kopplungsmittel 6 verschwenkbar ist.

Die Verschwenkung bewegt - wie oben beschrieben - die flexible Absorberrohrvorrichtung 3 mit. Das Kopplungsmittel 6 bewegt sich passiv mit. Ein seitliches Ausweichen (in der Darstellung der Fig. 1 nach links oder rechts) der angekoppelten ersten flexiblen Rohrvorrichtung 1 wird damit vermieden oder zumindest begrenzt.

Das zweite Ende der flexiblen Rohrvorrichtung 2 ist mit einem Verbindungselement 17, hier einem starren, im Wesentlichen U-förmigen, nach oben offenem Rohrelement verbunden, das vom Arbeitsmedium durchströmbar ist. In anderen Ausführungsformen kann das Verbindungselement 17 in sich flexibel ausgebildet sein oder zumindest flexible Teile aufweisen.

Das erste Ende 13 der zweiten flexiblen Rohrvorrichtung 2 ist mit dem Verbindungelement 17 verbunden. Das zweite Ende 14 der zweiten flexiblen Rohrvorrichtung 2 ist wiederum mit dem Anschluss 22 (hier eine Festleitung 22) verbunden.

Mit dieser Ausführungsform ist es möglich, das Arbeitsmedium ohne Zwischenschaltung einer Drehdurchführung zu dem Absorberrohr 21 oder vom Absorberrohr 21 zu transportieren. Die Ausführungsform kann dichtungsfrei ausgeführt werden.

Durch die Verwendung der festen Kopplung der flexiblen Rohrvorrichtungen 1, 2, 3 (hier über eine Kopplung an der ersten flexiblen Rohrvorrichtung 1) wird die Art der Belastungen auf unterschiedliche Teile der flexiblen Rohrvorrichtungen 1, 2, 3 aufgeteilt.

Die erste und zweite flexible Rohrvorrichtung 1, 2 fangen bei der Bewegung des Solarkollektors 20 anfallende Drehmomente auf, da sie verformbar sind. Die zwei Rohrvorrichtungen 1, 2 sind dabei durch das U-förmige Verbindungselement 17 so verbunden, dass sie zueinander in parallelen Ebenen liegen und sich in diesen bewegen. Wie in Fig. 1A, 4, 5 und 6 dargestellt ist, erlaubt diese Anordnung, dass die flexiblen Rohrvorrichtungen 1, 2 immer nur so gekrümmt werden, ohne dass sie durch eine Nulllage hindurchgehen müssen. Dieses "Durchdrücken" der flexiblen Rohrvorrichtungen 1, 2 hätte gerade für Metallschläuche negative Folgen. Durch die Anordnung gemäß der Ausführungsform wird die jeweilige Belastung der flexiblen Rohrvorrichtungen 1, 2 auf Krümmungen begrenzt, die jeweils in entgegengesetzte Richtungen zeigen (abgesehen z.B. von besonderen Lagen, in denen beide flexible Rohrvorrichtungen 1, 2 jeweils gestreckt in ihren Ebenen liegen.) Somit werden die flexiblen Rohrvorrichtungen 1, 2 in ihren Ebenen jeweils gekrümmt verformt.

Die Absorberrohrvorrichtung 3 fängt die Expansions- oder Kontraktionsbewegung des Absorberrohres 21 auf, so dass hier im Wesentlichen die flexible Absorberrohrvorrichtung 3 nur in einer Ebene gekrümmt verformet wird.

Durch die Entkopplung werden komplexe mehrachsige Spannungszustände in den flexiblen Rohrvorrichtungen 1, 2, 3 vermieden oder sie werden zumindest minimiert.

Es ist auch möglich mehr als drei flexible Rohrverbindungen zu verwenden, deren räumliche Lage jeweils über ein Stützelement 5 stabilisiert wird.

Im Übrigen ist die Anordnung des Stützelementes 5 mit dem Kopplungsmittel 6 in der Fig. 1A gut erkennbar. Des Weiteren zeigt die Fig. 1A in schematischer Weise einen Zusatz zu der bisher dargestellten Ausführungsform, nämlich ein Führungsmittel 7 (oder auch ein Abstützmittel). Dieses Führungsmittel 7 kann z.B. eine starre Führung bieten, auf der das Verbindungsmittel 17 der beiden flexiblen Rohrvorrichtungen 1, 2 entlang fahren kann. Auch kann das Führungsmittel 7 eine mitlaufende Unterstützung vor allem in vertikaler Bildung umfassen. In beiden Fällen kann die auf das freie Ende der beiden flexiblen Rohrvorrichtungen 1, 2 - d.h. auf das Verbindungselement 17 - wirkende Schwerkraft mindestens teilweise kompensiert werden.

Ferner ist in Fig. 1A dargestellt, dass die Krümmung der beiden flexiblen Rohrvorrichtungen jeweils anders orientiert ist. Die erste flexible Rohrvorrichtung 1 ist konkav, die zweite flexible Rohrvorrichtung ist konvex gekrümmt. Gegenüber der Ebene, in der das U-förmige Verbindungselement 17 liegt, spannen die jeweiligen Endpunkte der hier verwendeten flexiblen Rohrvorrichtungen 1, 2 gleich große Winkel auf.

Die flexiblen Rohrvorrichtungen 1, 2, 3 weisen hier jeweils z.B. mehrlagige Metall-Wellschläuche (Durchmesser z.B. 50 oder 65 mm) auf. Um hohen Drücken standzuhalten sind die Metallschläuche jeweils mit einer Umflechtung versehen. Zur Verringerung der Wärmeverluste sind die flexiblen Rohrvorrichtungen 1, 2, 3 mit einer flexiblen Dämmschicht umgeben. Als Außentemperatur der flexiblen Rohrvorrichtungen 1, 2, 3 können bis zu 70 oder 80°C angenommen werden. Die Dämmschichten sind dann noch von einer Dampfsperre und einer mechanischen Schutzschicht aus einem Profilwickelschlauch umgeben. Grundsätzlich sind aber auch andere Ausführungsformen von Metall-Wellschläuchen denkbar, wobei es nicht zwingend ist, dass alle flexiblen Rohrvorrichtungen 1, 2, 3 die gleiche interne Bauweise haben.

In den Fig. 3 und 4 werden unterschiedliche Auslenkungen (nicht maßstäblich) der ersten Ausführungsform dargestellt, wobei insbesondere die Lage- und Formänderung der flexiblen Rohrvorrichtungen beschrieben werden. Eine Lageänderung bedingt dabei die Formänderungen.

In Fig. 3 ist in einer schematischen Darstellung eine Seitenansicht (entsprechend Fig. 1) der Ausführungsform dargestellt, wobei zwei Lagen des Absorberrohres 21 dargestellt sind. Wie oben dargestellt, schließt sich an das Absorberrohr 21 die flexible Absorberrohrvorrichtung 3 und die erste und zweite flexible Rohrvorrichtung 1, 2 an.

Das zweite Ende 14 der zweiten flexiblen Rohrvorrichtung 2 ist mit dem Anschluss 22 (hier eine Festleitung 22) verbunden. Die erste flexible Rohrvorrichtung 1 ist mit dem Stützelement 5 gekoppelt. Die beiden flexiblen Rohrvorrichtungen 1, 2 sind untereinander mit dem Verbindungsmittel 17 verbunden.

Mit durchgezogenen Linien ist in Fig. 3 eine kalte Arbeitsposition dargestellt, d.h. das Absorberrohr 21 weist eine vergleichsweise geringe Länge auf. In gestrichelter Darstellung ist in Fig. 3 eine heiße Arbeitsposition dargestellt, d.h. die flexible Absorberrohrvorrichtung 3' nimmt vor allem die Verformung auf Grund der Längenänderung E im Wesentlichen auf.

In Fig. 4 ist in der Seitenansicht das Absorberrohr 21 in zwei Extremlagen dargestellt. In der ersten Lage 21' fluchten die flexible Absorberohrvorrichtung 3 und die erste flexible Rohrvorrichtung 1 miteinander. Die zweite flexible Rohrvorrichtung 2 liegt im Wesentlichen horizontal, so dass in dieser Ansicht ein Winkel von ca. 30° zwischen der ersten flexiblen Rohrvorrichtung 1 und der zweiten flexiblen Rohrvorrichtung 2 besteht.

Wenn jetzt das Absorberrohr 21 nach rechts verschwenkt - entsprechend einer Bewegung im Laufe eines ganzen Tages - so ist der Verlauf der drei flexiblen Rohrvorrichtungen 1, 2, 3 in gestichelter Linie eingezeichnet. Das Stützelement 5' in der ersten Lage wird gemäß des Pfeiles R verschwenkt, so dass eine zweite Lage des Stützelementes 5" eingenommen wird.

Dieser Prozess wiederholt sich täglich.

In der Ansicht der Fig. 4 ist die flexible Absorberrohrvorrichtung 3 im Wesentlichen gerade angeordnet, die angeschlossene flexible erste Rohrvorrichtung 1 ist hingegen sehr stark nach unten gekrümmt. Die flexible zweite Rohrvorrichtung 2 ist dann in die entgegengesetzte Richtung gekrümmt.

Dies zeigt, dass die drei flexiblen Rohrvorrichtungen 1, 2, 3 sehr stark verformbar - aber jeweils nicht in einem komplexen Spannungszustand - sind und somit Bewegungen der Solarkollektoren 20 in großem Umfang mitmachen können, ohne dass besondere Drehdurchführungen mit anfälligen Dichtungen vorhanden sein müssen.

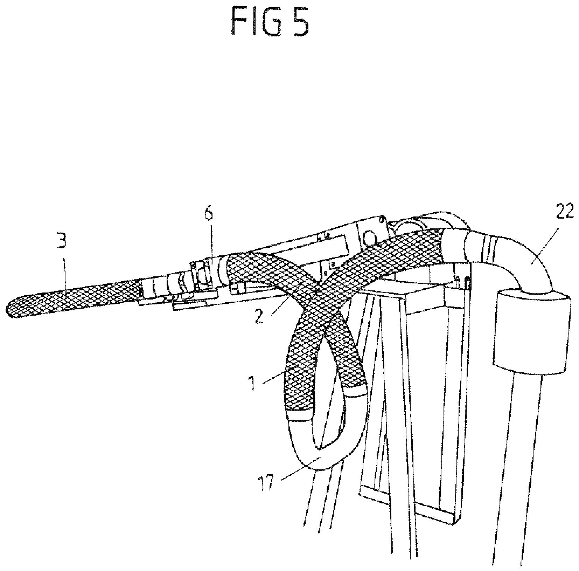

In Fig. 5 ist die Ausführungsform dargestellt, bei der das Absorberrohr 21 in der Lage liegt, wie sie in der Fig. 4 gestrichelt dargestellt ist; nur dass die Ansicht von der anderen Seite der Vorrichtung gezeigt wird. Dabei sind insbesondere die gegenläufigen Krümmungen der ersten und zweiten flexiblen Rohrvorrichtung 1, 2 erkennbar. Ferner ist das aus der Senkrechten verschwenkte Stützelement 5 mit dem Kopplungselement 6 dargestellt, wobei deutlich wird, dass das Kopplungselement 6 im gleichen Maße bewegt wird, wie der Solarkollektor 20 (hier nicht dargestellt).

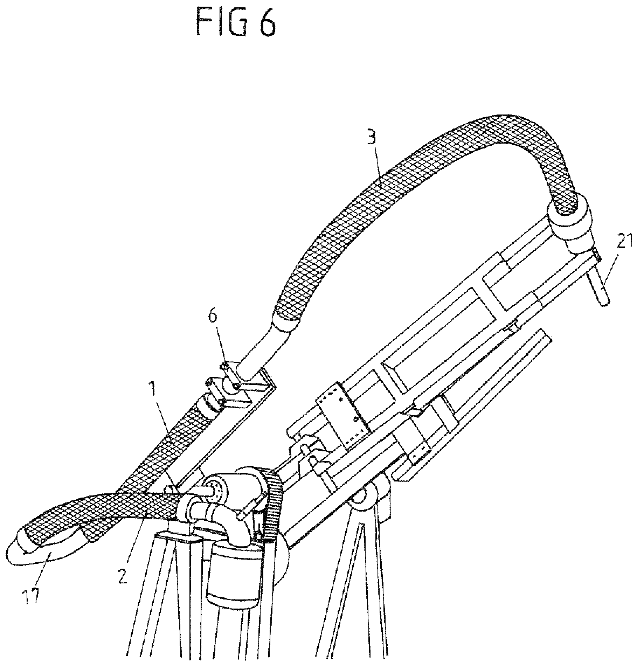

In Fig. 6 ist in einer perspektivischen Darstellung eine gegenüber der Ansicht der Fig. 5 ca. 140° verkappte Lage der Absorberrohre 21 dargestellt. Die Krümmung der ersten und zweiten flexiblen Rohrvorrichtung 1, 2, ist gut erkennbar.

In Fig. 5 und 6 ist auch erkennbar, wie die Bewegung des Stützelementes 5 an die Bewegung der Halterung 23, der Absorberrohre 21 und dem hier - aus Gründen der Einfachheit nicht dargestellten - Solarkollektor synchron gekoppelt ist. Wird der Solarkollektor 20 verschwenkt, dann schwenkt das Stützelement 5 mit dem Kopplungsmittel 6 mit.

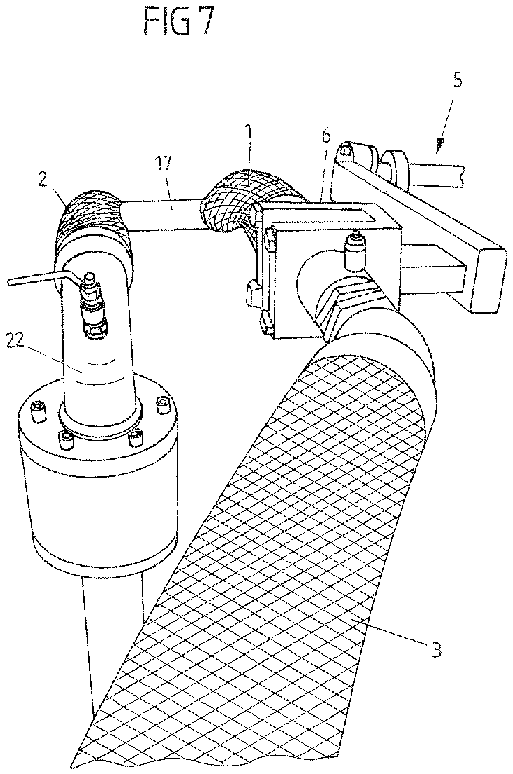

In Fig. 7 ist ein Detail der Ausführungsform dargestellt, bei dem die in parallelen Ebenen angeordneten ersten und zweiten flexiblen Rohrvorrichtungen 1, 2 erkennbar sind, die am entfernten Ende durch das Verbindungselement 17 miteinander verbunden sind; die flexiblen Rohrvorrichtungen 1, 2, bilden die Verlängerungen der Schenkel des U-förmigen Verbindungselementes 17

Auch ist die Kopplung oder Verbindung der ersten flexiblen Rohrvorrichtung 1 mit dem Stützelement 5 erkennbar und dem Kopplungselement 6 dargestellt. Wiederum hat das Kopplungselement 6 die Bewegung des hier nicht dargestellten Solarkollektors 20 mitgemacht.

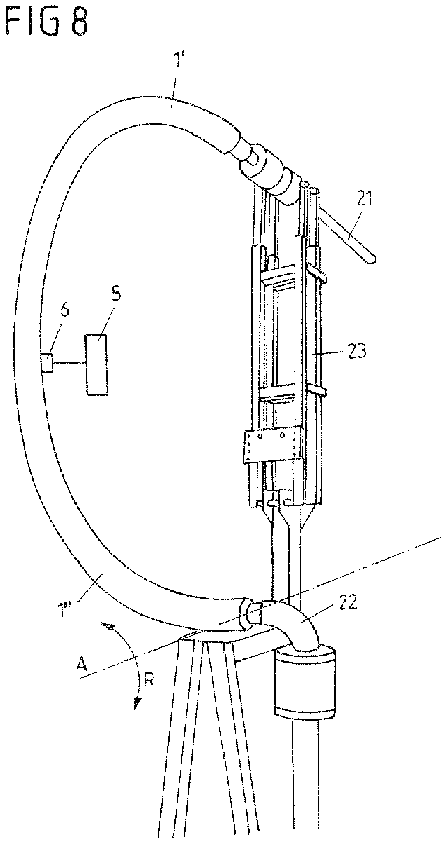

In Fig. 8 ist eine nicht erfindungsgemässe Vorrichtung dargestellt, die mit einer einzigen flexiblen Rohrvorrichtung 1 auskommt. Das erste Ende 11 ist dabei mit dem Absorberrohr 21 verbunden, das zweite Ende 12 ist mit dem Anschluss (hier eine Festleitung 22) verbunden. In etwa mittig ist die flexible Rohrvorrichtung 1 über das Kopplungsmittel 6 fest mit dem Stützmittel 5 verbunden. Das Kopplungsmittel 6 ist - wie in Zusammenhang mit den anderen Ausführungsformen fest mit der flexiblen Rohrvorrichtung 1 verbunden und bewegt sich synchron mit dem Solarkollektor 20. Aus Gründen der Übersichtlichkeit ist die Anbindung des Stützelementes 5 an den Rest Anlage hier nicht dargestellt.

Auch bei dieser Ausführungsform entkoppelt das Kopplungsmittel 6 die Spannungszustände in dem flexiblen Rohrvorrichtungen 1, 2. Oberhalb - in der Darstellung der Fig. 8 - des Kopplungsmittels 6 wird die flexible Rohrvorrichtung 1' im Wesentlichen der Bewegung des längenveränderlichen Absorberrohres 21 folgen. Unterhalb der Kopplungsvorrichtung 6 werden aus der Rotation selbst resultierende Spannungen durch die flexible Rohrvorrichtungen 1" aufgefangen.

In Fig. 9 ist in vereinfachender Weise dargestellt, wie Solarkollektorvorrichtungen 51, 52, 53, 54 miteinander in einem solarthermischen Kraftwerk verbunden sind. Aus einem Zulauf 60 strömt das Arbeitsmedium in eine erste Solarkollektorvorrichtung 31, dann über Rohrleitungen in eine zweite, dritte und vierte Solarkollektorvorrichtung 32, 33, 34. Die Solarkollektorvorrichtungen 31, 32, 33, 34 weisen jeweils zwei Vorrichtungen 50 zur Verbindung eines Absorberrohres 21 (hier nicht dargestellt) mit einem Anschluss auf, wobei der Anschluss hier nicht besonderes gekennzeichnet ist. Wie bereits beschrieben, können die Vorrichtungen 50 Längsdehnungen E der Absorberröhren 21 kompensieren. In einer solarthermischen Anlage erfahren aber auch die Rohrleitungen eine Längenausdehnung L. Die ist z.B. die sogenannte Cross-Over Leitung 62, die im Betrieb eine Längenänderung L aufweisen kann. Die Größe die Längenänderung hängt von den Betriebsbedingungen und der der Bauweise der Anlage ab. Die Größenordnung kann z.B. 10 bis 100 mm betragen.

Nach dem Verlassen der vierten Solarkollektorvorrichtung 54 strömt das Arbeitsmedium in einen Ablauf 62 in Richtung anderer Anlagenteile.

In Fig. 9A ist eine schematische Vorderansicht einer Solarkollektorvorrichtung 31 dargestellt, die an ihrer linken Seite an einen Anschluss 22 angeschlossen ist. Der Anschluss 22 ist mit einem Rohr verbunden, das im Betrieb eine Längenänderung L von ca. 10 bis 50 mm ausführen kann. Die Anbindung über die flexiblen Rohrvorrichtungen 1, 2, 3 entspricht dabei der Ausführungsform, die z.B. in Fig. 1 dargestellt ist.

Die beschriebenen Ausführungsformen werden im Zusammenhang mit Parabolspiegeln als Solarkollektoren 20 beschrieben. Grundsätzlich sind Ausführungsformen der Erfindung auch bei anderen Typen solarthermischer Kraftwerke einsetzbar, die ein Arbeitsmedium aufweisen, das von der Sonneneinstrahlung erhitzt wird. Auch sind grundsätzliche andere Anordnungen der Solarkollektoren 20 möglich.

Die Erfindung beschränkt sich in ihrer Ausführung nicht auf die vorstehend angegebenen bevorzugten Ausführungsbeispiele. Vielmehr ist eine Anzahl von Varianten denkbar, die von der erfindungsgemäßen Vorrichtung auch bei grundsätzlich anders gearteten Ausführungen Gebrauch machen.

### Bezugszeichenliste

- 1: erste flexible Rohrvorrichtung
- 2: zweite flexible Rohrvorrichtung
- 3: flexible Absorberrohrvorrichtung

- 5: Stützelement
- 6: Kopplungsmittel
- 7: Führungsmittel

- 11: erstes Ende der ersten flexiblen Rohrvorrichtung
- 12: zweites Ende der ersten flexiblen Rohrvorrichtung
- 13: erstes Ende der zweiten flexiblen Rohrvorrichtung
- 14: zweites Ende der zweiten flexiblen Rohrvorrichtung
- 15: erstes Ende der Absorberrohrvorrichtung
- 16: zweites Ende der Absorberrohrvorrichung
- 17: Verbindungselement

- 20: Solarkollektor
- 21: Absorberrohr
- 22: Anschluss, Festleitung
- 23: Halterung Solarkollektor, Schwenkarm
- 24: Lager
- 25: Befestigungsmittel des Stützelementes

- 31: erste Solarkollektorvorrichtung
- 32: zweite Solarkollektorvorrichtung
- 33: dritte Solarkollektorvorrichtung
- 34: vierte Solarkollektorvorrichtung

- 50: Vorrichtung zur Verbindung eines Absorberrohres mit einem Anschluss

- 60: Zulauf für Arbeitsmedium
- 61: Ablauf für Arbeitsmedium

- A: Schwenkachse des Solarkollektors
- E: lineare Bewegung des Absorberrohres
- F: Strömungsrichtung des Arbeitsfluides
- L: Längendehnung eines Rohres
- R: Verschwenkung im Schwenkachse A
- S: Bewegung des Kopplungsmittels relativ zum Stützelementes

## Patentansprüche

1. Vorrichtung zur Verbindung eines Anschlusses (22) mit einem Absorberrohr (21) eines solarthermischen Kraftwerks, wobei im Betrieb Strahlungsenergie von mindestens einem Solarkollektor (20) durch das Absorberrohr (21) aufnehmbar ist und an ein Arbeitsmedium abgegeben wird und der mindestens eine Solarkollektor (20) um eine Achse schwenkbar ausgebildet ist,
wobei die Vorrichtung mindestens eine vom Arbeitsmedium durchströmbare flexible Rohrvorrichtung (1, 2, 3) zur Verbindung des Anschlusses (22) mit dem Absorberrohr (21) umfasst, zur Aufnahme eines beim Verschwenken des mindestens einen Solarkollektors (20) auftretenden Drehmoments und / oder einer Kraft aufgrund einer Längenänderung (E),
wobei die Vorrichtung weiterhin ein Kopplungsmittel (6) und ein Stützelement (5) umfasst,
**dadurch gekennzeichnet, dass**
die mindestens eine flexible Rohrvorrichtung (1, 2, 3) über das Kopplungsmittel (6) fest mit dem Stützelement (5) gekoppelt ist, wobei im Betrieb das Stützelement (5) an die Schwenkbewegung des Solarkollektors (20) gekoppelt ist, wobei das Kopplungsmittel (6) die mindestens eine flexible Rohrvorrichtung (1, 2, 3) in zwei Bereiche teilt, wobei die mindestens eine flexible Rohrvorrichtung (1, 2, 3) so ausgebildet ist, dass zwischen dem Absorberrohr (21) und dem Kopplungsmittel (6) im Wesentlichen Kräfte aus Längenänderungen (E) des Absorberrohres (21) aufgenommen werden und dass zwischen dem Kopplungsmittel (6) und dem Anschluss (22) in einer ersten und zweiten flexiblen Rohrvorrichtung (1, 2) im Wesentlichen Kräfte und / oder Drehmomente aus der Schwenkbewegung der Solarkollektoren (20) aufgenommen werden, wobei die erste und zweite flexible Rohrvorrichtung (1, 2) durch ein, vom Arbeitsmedium durchströmbares Verbindungselement (17) so miteinander verbunden sind, dass sie zueinander in parallelen Ebenen liegen.

2. Vorrichtung nach Anspruch 1, **dadurch gekennzeichnet, dass** der Anschluss (22) an einer Festleitung und / oder einem Rohrleitungsende angeordnet ist.

3. Vorrichtung nach Anspruch 1 oder 2, **dadurch gekennzeichnet, dass** das Stützelement (5) relativ zu einer Halterung (23) des Solarkollektors (20) oder dem Solarkollektor (20) starr ausgebildet ist, so dass insbesondere die Bewegungen des Kopplungsmittel (6) am Stützelement synchron zur Bewegung des Solarkollektors (20) ist.

4. Vorrichtung nach mindestens einem der vorhergehenden Ansprüche, **gekennzeichnet**, dass das Verbindungselement (17) insbesondere als starres Rohrelement ausgebildet ist und insbesondere die flexiblen Rohrvorrichtungen (1, 2) untereinander die gleiche Länge aufweisen.

5. Vorrichtung nach Anspruch 4, **dadurch gekennzeichnet, dass** die zwei flexiblen Rohrvorrichtungen (1, 2) so angeordnet sind, dass im Betrieb die Krümmungen in der Regel gegensätzlich sind.

6. Vorrichtung nach Anspruch 4 oder 5, **dadurch gekennzeichnet, dass** das Verbindungselement (17) und / oder die mindestens eine flexible Rohrvorrichtung (1, 2, 3) mit einem Führungsmittel (7) gekoppelt ist, so dass insbesondere in der Bewegung der mindestens einen flexiblen Rohrvorrichtung (1, 2, 3) das Führungsmittel (7) Kräfte aufnehmen kann.

7. Vorrichtung nach Anspruch 6, **dadurch gekennzeichnet, dass** mit dem Führungsmittel (7) im Wesentlichen vertikale Kräfte zur Abstützung des Verbindungselemente (17) aufnehmbar sind.

8. Vorrichtung nach mindestens einem der vorhergehenden Ansprüche, **dadurch gekennzeichnet, dass** mindestens eine flexible Absorberrohrvorrichtung (3) mit dem Absorberrohr (21) koppelbar ist, wobei Änderungen der Längsausdehnung (E) des Absorberrohres (21) durch die flexible Absorberrohrvorrichtung (3) kompensierbar sind und die mindestens eine flexible Absorberrohrvorrichtung (3) in Strömungsrichtung (F) des Arbeitsmediums vor oder hinter der mindestens einen flexiblen Rohrvorrichtung (1, 2) angeordnet ist.

9. Vorrichtung nach mindestens einem der vorhergehenden Ansprüche, **dadurch gekennzeichnet, dass** die mindestens zwei flexiblen Rohrvorrichtungen (1, 2) und / oder die flexible Absorberrohrvorrichtung (3) als Metallschlauch ausgebildet sind oder einen Metallschlauch aufweisen.

10. Vorrichtung nach mindestens einem der vorhergehenden Ansprüche, **gekennzeichnet durch** ein Mittel zur Synchronisierung der Schwenkbewegung der flexiblen Rohrvorrichtungen (1, 2) mit der Schwenkbewegung des mindestens einen Solarkollektors (20), wobei das Mittel zur Synchronisierung insbesondere einen Schwenkarm (23) als Halterung des mindestens einen Solarkollektors (20) aufweist.

11. Vorrichtung nach mindestens einem der vorhergehenden Ansprüche, **dadurch gekennzeichnet, dass** die mindestens eine flexible Rohrvorrichtung (1, 2) mit einem Kompensatorensystem mit mindestens einem Angularkompensator, mindestens einem Lateral-Kompensator, mindestens einem Universal- und / oder mindestens einem kardanischen Kompensator, insbesondere drei Angular-Kompensatoren gekoppelt ist.

12. Vorrichtung nach mindestens einem der vorhergehenden Ansprüche, **dadurch gekennzeichnet, dass** das Kopplungsmittel (6) oberhalb der Schwenkachse (A) angeordnet ist und insbesondere die Ebene, in der die Halterung (23) um die Schwenkachse (A) verschwenkbar ist, parallel zu der Ebene ist, in der das Kopplungsmittel (6) verschwenkbar ist.

13. Solarthermisches Kraftwerk mit mindestens einer der Vorrichtungen zur Verbindung eines Anschlusses (22) mit einem Absorberrohr (21) nach den Ansprüchen 1 bis 12.

14. Verfahren zur Umwandlung von Solarenergie in thermische Energie unter Verwendung mindestens einer Vorrichtung zur Verbindung eines Anschlusses (22) mit einem Absorberrohr (21) gemäß mindestens einem der Ansprüche 1 bis 12.

## Claims

1. Apparatus for connecting a connector (22) to an absorber tube (21) of a solar thermal power plant, wherein during operation radiation energy from at least one solar collector (20) being receivable by the absorber tube (21), the radiation energy being output to an operating medium, and the at least one solar collector (20) being configured such that it can be pivoted about an axis, the apparatus comprising at least one flexible tube apparatus (1, 2, 3) for connecting the connector (22) to the absorber tube (21) in order to absorb a torque which occurs during pivoting of the at least one solar collector (20) and/or a force on account of a length change (E), through which flexible tube apparatus (1, 2, 3) the operating medium can flow, the apparatus comprising, furthermore, a coupling means (6) and a supporting element (5), **characterized in that** the at least one flexible tube apparatus (1, 2, 3) is coupled fixedly to the supporting element (5) via the coupling means (6), the supporting element (5) being coupled during operation to the pivoting movement of the solar collector (20), the coupling means (6) dividing the at least one flexible tube apparatus (1, 2, 3) into two regions, the at least one flexible tube apparatus (1, 2, 3) being configured in such a way that substantially forces from length changes (E) of the absorber tube (21) are absorbed between the absorber tube (21) and the coupling means (6), and that substantially forces and/or torques from the pivoting movement of the solar collectors (20) are absorbed between the coupling means (6) and the connector (22) in a first and second flexible tube apparatus (1, 2), the first and second flexible tube apparatus (1, 2) being connected to one another by way of a connecting element (17), through which the operating medium can flow, in such a way that the said flexible tube apparatuses (1, 2) lie in parallel planes with respect to one another.

2. Apparatus according to Claim 1, **characterized in that** the connector (22) is arranged on a fixed line and/or a tube line end.

3. Apparatus according to Claim 1 or 2, **characterized in that** the supporting element (5) is of rigid configuration relative to a holder (23) of the solar collector (20) or relative to the solar collector (20), so that, in particular, the movement of the coupling means (6) on the supporting element is synchronous with respect to the movement of the solar collector (20).

4. Apparatus according to at least one of the preceding claims, **characterized in that** the connecting element (17) is configured, in particular, as a rigid tube element, and, in particular, the flexible tube apparatuses (1, 2) have the same length among one another.

5. Apparatus according to Claim 4, **characterized in that** the two flexible tube apparatuses (1, 2) are arranged in such a way that the curvatures are usually opposed during operation.

6. Apparatus according to Claim 4 or 5, **characterized in that** the connecting element (17) and/or the at least one flexible tube apparatus (1, 2, 3) are/is coupled to a guide means (7), so that the guide means (7) can absorb forces, in particular, in the movement of the at least one flexible tube apparatus (1, 2, 3).

7. Apparatus according to Claim 6, **characterized in that** substantially vertical forces for supporting the connecting elements (17) can be absorbed by way of the guide means (7).

8. Apparatus according to at least one of the preceding claims, **characterized in that** at least one flexible absorber tube apparatus (3) can be coupled to the absorber tube (21), wherein changes in the longitudinal extent (E) of the absorber tube (21) can be compensated for by way of the flexible absorber tube apparatus (3), and the at least one flexible absorber tube apparatus (3) being arranged upstream or downstream of the at least one flexible tube apparatus (1, 2) in the flow direction (F) of the operating medium.

9. Apparatus according to at least one of the preceding claims, **characterized in that** the at least two flexible tube apparatuses (1, 2) and/or the flexible absorber tube apparatus (3) are/is configured as a metal hose or have/has a metal hose.

10. Apparatus according to at least one of the preceding claims, **characterized by** a means for synchronizing the pivoting movement of the flexible tube apparatuses (1, 2) with the pivoting movement of the at least one solar collector (20), the means for synchronizing having, in particular, a pivoting arm (23) as a holder of the at least one solar collector (20).

11. Apparatus according to at least one of the preceding claims, **characterized in that** the at least one flexible tube apparatus (1, 2) is coupled to a compensator system with at least one angular compensator, at least one lateral compensator, at least one universal and/or at least one cardanic compensator, in particular three angular compensators.

12. Apparatus according to at least one of the preceding claims, **characterized in that** the coupling means (6) is arranged above the pivoting axis (A), and, in particular, the plane, in which the holder (23) can be pivoted about the pivoting axis (A), is parallel to the plane, in which the coupling means (6) can be pivoted.

13. Solar thermal power plant having at least one of the apparatuses for connecting a connector (22) to an absorber tube (21) according to Claims 1 to 12.

14. Method for converting solar energy into thermal energy with the use of at least one apparatus for connecting a connector (22) to an absorber tube (21) according to at least one of Claims 1 to 12.

## Revendications

1. Dispositif pour relier un raccord (22) avec un tube absorbeur (21) d'une centrale thermique solaire, de l'énergie rayonnante d'au moins un collecteur solaire (20) pouvant être absorbée par le tube absorbeur (21) durant le fonctionnement et étant délivrée à un milieu de travail et l'au moins un collecteur solaire (20) étant configuré pivotant autour d'un axe,
le dispositif comportant au moins un dispositif à tubes flexibles (1, 2, 3) pouvant être traversé par un courant de milieu de travail et servant à relier le raccord (22) au tube absorbeur (21), destiné à absorber un couple qui se produit lors du pivotement de l'au moins un collecteur solaire (20) et/ou une force résultant d'un changement de longueur (E),
le dispositif comportant en outre un moyen d'accouplement (6) et un élément support (5),
**caractérisé en ce que** l'au moins un dispositif à tubes flexibles (1, 2, 3) est accouplé à demeure à l'élément support (5) par le biais du moyen d'accouplement (6), l'élément support (5) étant couplé au mouvement de pivotement du collecteur solaire (20) lors du fonctionnement, le moyen d'accouplement (6) divisant l'au moins un dispositif à tubes flexibles (1, 2, 3) en deux zones, l'au moins un dispositif à tubes flexibles (1, 2, 3) étant configuré de telle sorte que ce sont sensiblement des forces résultant des changements de longueur (E) du tube absorbeur (21) qui sont absorbées entre le tube absorbeur (21) et le moyen d'accouplement (6) et **en ce que** ce sont sensiblement des forces et/ou des couples résultant du mouvement de pivotement des collecteurs solaires (20) qui sont absorbées entre le moyen d'accouplement (6) et le raccord (22) dans un premier et un deuxième dispositif à tubes flexibles (1, 2), le premier et le deuxième dispositif à tubes flexibles (1, 2) étant reliés l'un à l'autre par un élément de liaison (17) pouvant être traversé par un courant de milieu de travail de telle sorte qu'ils se trouvent dans des plans parallèles l'un par rapport à l'autre.

2. Dispositif selon la revendication 1, **caractérisé en ce que** le raccord (22) est disposé au niveau d'une conduite fixe et/ou d'une extrémité de conduite tubulaire.

3. Dispositif selon la revendication 1 ou 2, **caractérisé en ce que** l'élément support (5) est configuré rigide par rapport à une fixation (23) du collecteur solaire (20) ou au collecteur solaire (20), de sorte que les mouvements du moyen d'accouplement (6) au niveau de l'élément support sont notamment synchrones par rapport au mouvement du collecteur solaire (20).

4. Dispositif selon au moins l'une des revendications précédentes, **caractérisé en ce que** l'élément de liaison (17) est notamment réalisé sous la forme d'un élément tubulaire rigide et les dispositifs à tubes flexibles (1, 2) présentent notamment la même longueur entre eux.

5. Dispositif selon la revendication 4, **caractérisé en ce que** les deux dispositifs à tubes flexibles (1, 2) sont disposés de telle sorte que lors du fonctionnement, les courbures sont généralement en opposition.

6. Dispositif selon la revendication 4 ou 5, **caractérisé en ce que** l'élément de liaison (17) et/ou l'au moins un dispositif à tubes flexibles (1, 2, 3) est couplé à un moyen de guidage (7), de sorte que le moyen de guidage (7) peut absorber les forces notamment lors du mouvement de l'au moins un dispositif à tubes flexibles (1, 2, 3).

7. Dispositif selon la revendication 6, **caractérisé en ce que** le moyen de guidage (7) permet sensiblement d'absorber les forces verticales destinées à soutenir les éléments de liaison (17).

8. Dispositif selon au moins l'une des revendications précédentes, **caractérisé en ce qu'**au moins un dispositif à tube absorbeur (3) flexible peut être couplé au dispositif à tube absorbeur (3), les changements de l'étendue en longueur (E) du tube absorbeur (21) pouvant être compensés par le dispositif à tube absorbeur (3) flexible et l'au moins un dispositif à tube absorbeur (3) flexible étant disposé avant ou après l'au moins un dispositif à tubes flexibles (1, 2) dans le sens de l'écoulement (F) du milieu de travail.

9. Dispositif selon au moins l'une des revendications précédentes, **caractérisé en ce que** les au moins deux dispositifs à tubes flexibles (1, 2) et/ou le dispositif à tube absorbeur (3) flexible sont réalisés sous la forme de tuyaux métalliques ou possèdent un tuyau métallique.

10. Dispositif selon au moins l'une des revendications précédentes, **caractérisé par** un moyen de synchronisation du mouvement de pivotement des dispositifs à tubes flexibles (1, 2) avec le mouvement de pivotement de l'au moins un collecteur solaire (20), le moyen de synchronisation possédant notamment un bras pivotant (23) en tant que fixation de l'au moins un collecteur solaire (20) .

11. Dispositif selon au moins l'une des revendications précédentes, **caractérisé en ce que** l'au moins un dispositif à tubes flexibles (1, 2) est couplé à un système compensateur comprenant au moins un compensateur angulaire, au moins un compensateur latéral, au moins un compensateur universel et/ou au moins un compensateur à cardan, notamment trois compensateurs angulaires.

12. Dispositif selon au moins l'une des revendications précédentes, **caractérisé en ce que** le moyen d'accouplement (6) est disposé au-dessus de l'axe de pivotement (A) et le plan dans lequel la fixation (23) peut pivoter autour de l'axe de pivotement (A) est notamment parallèle au plan dans lequel peut pivoter le moyen d'accouplement (6).

13. Centrale thermique solaire comprenant au moins l'un des dispositifs pour relier un raccord (22) avec un tube absorbeur (21) selon l'une des revendications 1 à 12.

14. Procédé pour convertir de l'énergie solaire en énergie thermique en utilisant au moins un dispositif pour relier un raccord (22) avec un tube absorbeur (21) selon au moins l'une des revendications 1 à 12.
